# EUROPÄISCHE PATENTSCHRIFT

(11) **EP 1 815 549 B1**
(45) Veröffentlichungstag und Bekanntmachung des Hinweises auf die Patenterteilung: **29.04.2009**
(21) Anmeldenummer: 05795346.5
(22) Anmeldetag: 17.10.2005
(51) Int. Cl.: H01M 8/04

(54) **BRENNSTOFFZELLENSYSTEM MIT FL]SSIGKEITSABSCHEIDER**
FUEL CELL SYSTEM WITH A LIQUID SEPARATOR
SYSTEME DE PILES A COMBUSTIBLE POURVU D'UN SEPARATEUR DE LIQUIDE

(30) Priorität: 25.11.2004 DE 102004056952; 14.03.2005 US 661648 P
(43) Veröffentlichungstag der Anmeldung: 08.08.2007
(73) Patentinhaber: NuCellSys GmbH, 73230 Kirchheim/Teck-Nabern (DE)
(72) Erfinder: BARLEBEN, Roger-Marcelo, 30419 Hannover (DE); LIMBECK, Uwe, 73230 Kirchheim (DE); MAZZOTTA, Cosimo, S., 89073 Ulm (DE); PFLUGFELDER, Hans-Jörg, 71701 Schwieberdingen (DE); STROHMAIER, Manfred, 73275 Ohmden (DE)
(74) Vertreter: JENSEN & SON
(86) Internationale Anmeldenummer: PCT/EP2005/011141
(87) Internationale Veröffentlichungsnummer: WO 2006/056276

(56) Entgegenhaltungen:
- US-A1- 2003 044 670
- US-B1- 6 203 935
- PATENT ABSTRACTS OF JAPAN Bd. 2000, Nr. 12, 3. Januar 2001 (2001-01-03) & JP 2000 260459 A (OSAKA GAS CO LTD), 22. September 2000 (2000-09-22)

## Beschreibung

Die Erfindung betrifft ein Brennstoffzellensystem mit mindestens einer Brennstoffzelle, die einen Anodenbereich sowie einen durch einen Elektrolyt von dem Anodenbereich getrennten Kathodenbereich aufweist, und einem ersten Flüssigkeitsabscheider.

Bei typischen, gegenwärtig eingesetzten Brennstoffzellen ist ein Kathodenbereich durch einen Elektrolyten von einem Anodenbereich getrennt, wobei der eingesetzte Elektrolyt je nach Brennstoffzellentyp variiert. Beispielsweise wird bei Polymer-Elektrolyt-Brennstoffzellen als Elektrolyt eine protonenleitfähige Membran verwendet. Im Betrieb der Brennstoffzelle wird der Anodenseite Wasserstoff und der Kathodenseite ein sauerstoffhaltiges Oxidationsmittel, beispielsweise Luft, zugeführt. Die Wasserstoffmolekühle reagieren an einem im Anodenbereich vorhandenen Anodenkatalysator nach der Gleichung

H₂ → 2·H⁺ + 2·e⁻

und geben dabei unter Bildung von positiv geladenen Wasserstoffionen Elektronen an die Elektrode ab.

Die im Anodenbereich gebildeten H⁺-Ionen diffundieren anschließend durch den Elektrolyt zur Kathode, wo sie an einem im Kathodenbereich vorhandenen Kathodenkatalysator mit dem der Kathode zugeführten Sauerstoff sowie den über einen äußeren Stromkreis zur Kathode geleiteten Elektronen nach der Gleichung

0,5·O₂ + 2·H⁺ + 2·e⁻ → H₂O

zu Wasser reagieren.

In allen bekannten Brennstoffzellensystemen wird somit Wasser als Reaktionsprodukt der elektrochemischen Prozesse in der Brennstoffzelle gebildet. Darüber hinaus wird unter Umständen zusätzliches Wasser gemeinsam mit den dem Anodenbereich bzw. dem Kathodenbereich zuzuführenden Reaktanden in das Brennstoffzellensystem eingetragen. Beispielsweise kann in den dem Anodenbereich zuzuführenden Anodengasen oder auch in dem dem Kathodenbereich zuzuführenden Oxidationsmittel, wie z.B. Luft, Feuchtigkeit enthalten sein.

Flüssiges Wasser kann jedoch in dem Brennstoffzellensystem, insbesondere im Bereich der Brennstoffzelle vorgesehene Strömungskanäle blockieren und dadurch eine gleichmäßige Verteilung der gasförmigen Reaktanden in dem System bzw. der Brennstoffzelle beeinträchtigen. Dies kann sich negativ auf den Umsetzungsgrad der Reaktanden in der Brennstoffzelle und somit auf den Wirkungsgrad des Gesamtsystems auswirken. Darüber hinaus kann in dem Brennstoffzellensystem vorhandenes flüssiges Wasser bei tiefen Temperaturen gefrieren, was zu Schäden an den Systemkomponenten führen kann. Aufgrund dessen umfassen bekannte Brennstoffzellensysteme üblicherweise an kritischen Punkten in dem System angeordnete Flüssigkeitsabscheider, um flüssiges Wasser aus dem System zu entfernen.

Beispielsweise beschreibt die US 5,200,278 ein Brennstoffzellensystem mit einer Brennstoffzelle, einer Anodengaszufuhrleitung, einer Anodengasrezirkulationsleitung, einer Kathodengaszufuhrleitung sowie einer Kathodengasabfuhrleitung. In der Kathodengasabfuhrleitung sowie in der Anodengasrezirkulafiionsleitung ist jeweils ein Flüssigkeitsabscheider mit einem Reservoir zur Aufnahme von flüssigem Wasser vorgesehen. Das in dem Reservoir gesammelte Wasser wird periodisch aus dem Reservoir abgeführt. Hierzu ist jedem Wasserabscheider eine mit dem Reservoir des Wasserabscheiders verbundene Wasserabfuhrleitung sowie ein in dieser Wasserabfuhrleitung angeordnetes Ventil zugeordnet. Wenn der Wasserpegel in dem Reservoir des Wasserabscheiders eine vorgegebene Höhe überschreitet, wird das Ventil geöffnet, so dass das in dem Reservoir gesammelte Wasser über die Wasseribfuhrleitung aus dem Brennstoffzellensystem abgeführt werden kann.

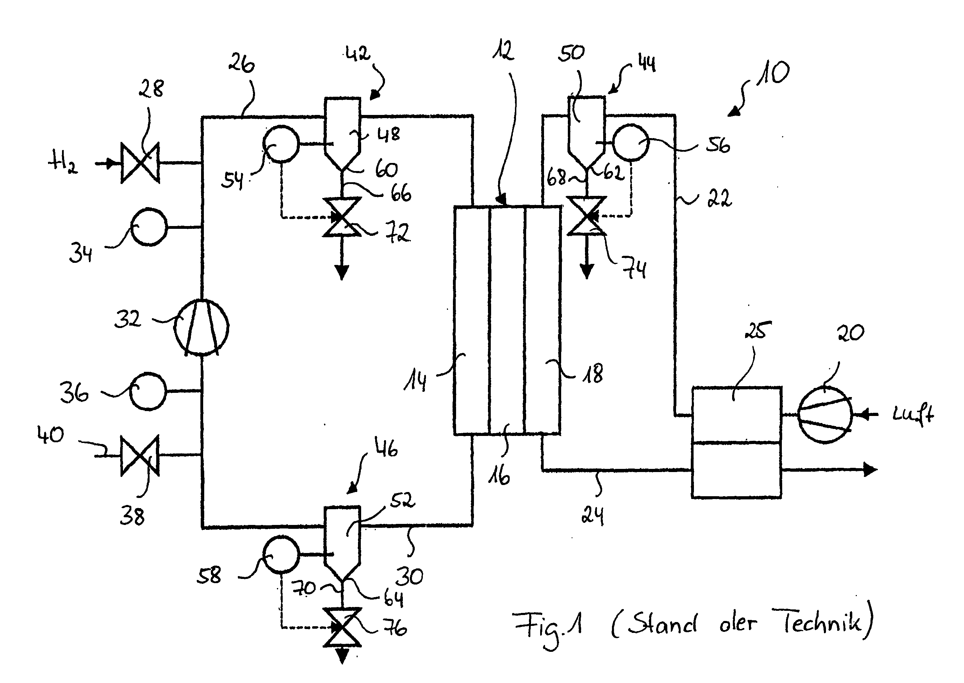

Ein weiteres aus dem Stand der Technik bekanntes Brennstoffzellensystem 10 ist in der Fig. 1 veranschaulicht. Das Brennstoffzellensystem 10 umfasst eine Brennstoffzelle 12 mit einem Anodenbereich 14, der durch einen Elektrolyt 16 von einem Kathodenbereich 18 getrennt ist. Obwohl in der Fig. 1 lediglich eine einzige Brennstoffzelle 12 gezeigt ist, umfasst das Brennstoffzellensystem 10 eine Mehrzahl von Brennstoffzellen 12, die zur Bildung eines sogenannten Brennstoffzellenstacks übereinander gestapelt sind.

Dem Kathodenbereich 18 der Brennstoffzelle 12 wird mit Hilfe eines Kompressors 20 über eine Kathodengaszufuhrleitung 22 Luft zugeführt. Zur Abfuhr von Kathodenabgasen ist der Kathodenbereich 18 der Brennstoffzelle 12 ferner mit einer Kathodengasabfuhrleitung 24 verbunden. Ein Befeuchtungssystem 25 steht mit der Kathodengaszufuhrleitung 22 und der Kathodengasabfuhrleitung 24 in Verbindung und ist beispielsweise als Gas zu Gas Membranbefeuchter ausgebildet.

Der Anodenbereich 14 der Brennstoffzelle 12 steht dagegen mit einer Anodengaszufuhrleitung 26 in Verbindung, durch die dem Anodenbereich 14 Wasserstoff zugeführt wird. Zur Dosierung der Wasserstoffzufuhr in den Anodenbereich 14 ist in der Anodengaszufuhrleitung 26 ein erstes Ventil 28 angeordnet. Eine Anodengasabfuhrleitung 30 ist als Rezirkulationsleitung ausgebildet, in der ein Rezirkulationsgebläse 32 angeordnet ist, um aus dem Anodenbereich 14 der Brennstoffzelle 12 austretende Anodenabgase im Kreislauf zu führen. In der als Rezirkulationsleitung ausgebildeten Anodengasabfuhrleitung 30 sind Sensoren 34, 36 vorgesehen, um den Druck, die Temperatur und die relative Feuchte der Anodenabgase sowie die Wasserstoffkonzentration in den Anodenabgasen zu messen. Darüber hinaus steht die Anodengasabfuhrleitung 30 über ein zweites Ventil 38 mit einer Spülleitung 40 in Verbindung. Nach dem Abschalten des Brennstoffzellensystems kann das zweite Ventil 38 geöffnet und der Anodenbereich 14 der Brennstoffzelle 12 mit einem durch die Spülleitung 40 zugeführten Spülgas, beispielsweise Luft, gespült werden.

Um zu verhindern, dass flüssiges Wasser in den Anodenbereich 14 bzw. den Kathodenbereich 18 der Brennstoffzelle 12 eindringt und in diesem Bereich vorhandene Reaktandenströmungskanäle blockiert, sind in der Anodengaszufuhrleitung 26 und in der Kathodengaszufuhrleitung 22 jeweils Flüssigkeitsabscheider 42,44 angeordnet. Ein weiterer Flüssigkeitsabscheider 46 ist in der Anodengasabfuhrleitung vorgesehen, um nachgeschaltete Komponenten, beispielsweise die Sensoren 34, 36 und das Rezirkualtionsgebläse 32, bei tiefen Temperaturen vor Schäden durch gefrierendes Wasser zu schützen.

Jeder Flüssigkeitsabscheider 42, 44, 46 umfasst ein Reservoir 48, 50, 52 und ist mit einem Pegelsensor 54, 56, 58 zur Messung des Flüssigkeitspegels in dem Reservoir 48, 50, 52 ausgestattet. Ein Flüssigkeitsauslass 60, 62, 64 eines jeden Flüssigkeitsabscheiders 42, 44, 46 ist mit einer Flüssigkeitsabfuhrleitung 66, 68, 70 verbunden, in der jeweils ein Ventil 72, 74, 76 vorgesehen ist. Wenn ein Pegelsensor 54, 56, 58 anzeigt, dass der Wasserpegel in dem Reservoir 48, 50, 52 des zugehörigen Flüssigkeitsabscheiders 42, 44, 46 eine vorgegebene Höhe erreicht hat, wird das diesem Flüssigkeitsabscheider 42, 44, 46 zugeordnete Ventil 72, 74, 76 geöffnet, so dass das in dem Reservoir 48, 50, 52 gesammelte Wasser durch den Flüssigkeitsauslass 60, 62, 64 und die Flüssigkeitsabfuhrleitung 66, 68, 70 aus dem Brennstoffzellensystem 10 abgeführt werden kann.

Bei dem in der Fig. 1 gezeigten bekannten Brennstoffzellensystem 10 ist jeder Flüssigkeitsabscheider 42, 44, 46 mit einer den Pegelsensor 54, 56, 58, das Ventil 72, 74, 76 sowie entsprechende Steuerungskomponenten zur Ansteuerung des Ventils 72, 74, 76 umfassenden separaten Anordnung zur gesteuerten periodischen Abfuhr von Wasser aus dem Reservoir 48, 50, 52 des Flüssigkeitsabscheiders 42, 44, 46 ausgestattet. Das System weist daher eine Vielzahl von gegebenenfalls störungsanfälligen Einzelkomponenten und folglich eine verhältnismäßig komplexe Gesamtstruktur auf.

Die Erfindung ist auf die Aufgabe gerichtet, ein Brennstoffzellensystem bereitzustellen, bei dem eine ordnungsgemäße Abfuhr von flüssigem Wasser aus dem System gewährleistet ist, das jedoch im Vergleich zu aus dem Stand der Technik bekannten Systemen eine verringerte Anzahl von Einzelkomponenten und damit eine vereinfachte Gesamtstruktur aufweist.

Zur Lösung dieser Aufgabe ist bei einem erfindungsgemäßen Brennstoffzellensystem, das einen ersten Flüssigkeitsabscheider umfasst, ein Flüssigkeitsauslass des ersten Flüssigkeitsabscheiders über eine erste Bypassleitung mit einem zweiten Flüssigkeitsabscheider oder einer Kathodengasabfuhrleitung verbunden, und die Bypassleitung weist Mittel zum Beheizen auf.

Die erfindungsgemäße Ausgestaltung des Brennstoffzellensystems ermöglicht es, auf die Ausstattung des ersten Flüssigkeitsabscheiders mit einer separaten Anordnung zur Abfuhr von Flüssigkeit aus einem Reservoir des ersten Flüssigkeitsabscheiders, d.h. einen Pegelsensor zur Messung des Flüssigkeitspegels in dem Reservoir, ein Ventil zur gesteuerten periodischen Abfuhr der Flüssigkeit aus dem Reservoir sowie eine Steuerung für das Ventil zu verzichten. Statt dessen wird die von dem ersten Flüssigkeitsabscheider abgeschiedene Flüssigkeit auf einfache Art und Weise und ohne Zwischenschaltung eines Ventils kontinuierlich über die erste Bypassleitung aus dem ersten Flüssigkeitsabscheider abgeführt. Bei liefen Temperaturen und Stillstand des Brennstoffzellensystems Kann die Bypassleitung durch gefrierendes Wasser blockiert werden. Dieses Problem wird durch die Bereitstellung eines beispielsweise elektrisch Bypassleitung beseitigt Bei einer besonders einfach aufgebauten Ausgestaltung des erfindungsgemäßen Brennstoffzellensystems ist der Flüssigkeitsauslass des ersten Flüssigkeitsabscheiders über die erste Bypassleitung mit einer Kathodengasabfuhrleitung verbunden, so dass die aus dem ersten Flüssigkeitsabscheider geleitete Flüssigkeit gemeinsam mit den Kathodenabgasen kontinuierlich aus dem Brennstoffzellensystem abgeführt wird. Alternativ dazu ist es jedoch auch möglich, den Flüssigkeitsauslass des ersten Flüssigkeitsabscheiders über die erste Bypassleitung mit einem zweiten Flüssigkeitsabscheider zu verbinden. Die über die erste Bypassleitung aus dem ersten Flüssigkeitsabscheider geleitete Flüssigkeit wird dann kontinuierlich dem zweiten Flüssigkeitsabscheider zugeführt.

Die Erfindung ermöglicht somit den Einsatz eines besonders einfach aufgebauten ersten Flüssigkeitsabscheiders, der überdies auch sehr kompakt gestaltet sein kann, da, falls gewünscht, sogar auf die Ausstattung des ersten Flüssigkeitsabscheiders mit einem Reservoir verzichtet werden kann. Darüber hinaus führt die erfindungsgemäße Anordnung in vorteilhafter Art und Weise zu einer Reduzierung der Anzahl der Einzelkomponenten des Gesamtsystems. Das eine verringerte Anzahl von Einzeikomponenten und insbesondere von Steuerungskomponenten umfassende erfindungsgemäße Brennstoffzellensystem zeichnet sich durch eine besonders geringe Störanfälligkeit aus. Schließlich erfordert das erfindungsgemäße System im Vergleich zu aus dem Stand der Technik bekannten Systemen einen verringerten Herstellungs-, Montage- und Wartungsaufwand.

Bei dem erfindungsgemäßen Brennstoffzellensystem sind eine Reihe vorteilhafter Ausgestaltungen möglich. Beispielsweise kann der erste Flüssigkeitsabscheider in einer Anodengaszufuhrleitung angeordnet sein, über die einem Anodenbereich der Brennstoffzelle Wasserstoff zugeführt wird. Durch die Anordnung des ersten Flüssigkeitsabscheiders in der Anodengaszufuhrleitung wird verhindert, dass flüssiges Wasser in einen Anodenbereich einer Brennstoffzelle eindringt und in diesem Bereich vorhandene Reaktandenströmungskanäle blockiert. Darüber hinaus wird vermieden, dass Systemkomponenten im Anodenbereich der Brennstoffzelle bei tiefen Temperaturen durch gefrierendes Wasser beschädigt werden.

Der Flüssigkeitsauslass des ersten Flüssigkeitsabscheiders ist über die erste Bypassleitung entweder mit der Kathodengasabfuhrleitung oder dem zweiten Flüssigkeitsabscheider verbunden, der beispielsweise in einer Kathodengaszufuhrleitung angeordnet sein kann. Ein in der Kathodengaszufuhrleitung angeordneter zweiter Flüssigkeitsabscheider verhindert, dass Reaktandenströmungskanäle im Kathodenbereich der Brennstoffzelle durch flüssiges Wasser blockiert und dass in diesem Bereich angeordnete Systemkomponenten bei tiefen Temperaturen durch gefrierendes Wasser beschädigt werden.

Alternativ dazu ist es jedoch auch möglich, den zweiten Flüssigkeitsabscheider in einer beispielsweise als Rezirkulationsleitung ausgebildeten Anodengasabfuhrleitung, oder einer Kathodengasabfuhrleitung, anzuordnen. Eine derartige Ausgestaltung des erfindungsgemäßen Brennstoffzellensystems ist insbesondere dann sinnvoll, wenn dem zweiten Flüssigkeitsabscheider nachgeschaltete empfindliche Komponenten des Brennstoffzellensystems bei tiefen Temperaturen vor Schäden durch gefrierendes Wasser geschützt werden sollen.

Bei einer weiteren vorteilhaften Ausführungsform des erfindungsgemäßen Brennstoffzellensystem ist der erste Flüssigkeitsabscheider in der beispielsweise als Rezirkulationsleitung ausgebildeten Anodengasabfuhrleitung und der zweite Flüssigkeitsabscheider in der Anodengaszufuhrleitung, der Kathodengaszufuhrleitung oder der Kathodengasabfuhrleitung angeordnet. Alternativ dazu ist es jedoch auch möglich, den ersten Flüssigkeitsabscheider in der Kathodengaszufuhrleitung und den zweiten Flüssigkeitsabscheider in der beispielsweise als Rezirkulationsleitung ausgebildeten Anodengasabfuhrleitung, der Anodengaszufuhrleitung oder der Kathodengasabfuhrleitung anzuordnen. Ferner kann der erste Flüssigkeitsabscheider in der Kathodengasabfuhrleitung und der zweite Flüssigkeitsabscheider in der beispielsweise als Rezirkulationsleitung ausgebildeten Anodengasabfuhrleitung, der Anodengaszufuhrleitung oder der Kathodengaszufuhrleitung angeordnet sein.

Vorzugsweise ist der erste Flüssigkeitsabscheider in einem ersten Bereich des Brennstoffzellensystems angeordnet, in dem ein erster Druck vorherrscht. Die erste Bypassleitung verbindet den Flüssigkeitsauslass des ersten Flüssigkeitsabscheiders vorzugsweise mit einem zweiten Bereich des Brennstoffzellensystems, in dem ein zweiter Druck vorherrscht, der geringer ist als der erste Druck. Bei einer derartigen Anordnung ist auf einfach Art und Weise eine kontinuierliche Abfuhr der von dem ersten Flüssigkeitsabscheider abgeschiedenen Flüssigkeit aus dem Flüssigkeitsauslass des ersten Flüssigkeitsabscheiders in Richtung des in dem Brennstoffzellensystem vorliegenden Druckgefälles gewährleistet.

Üblicherweise herrscht im Anodenbereich der Brennstoffzelle ein höherer Druck vor als im Kathodenbereich. Daher kann ein mit dem Anodenbereich der Brennstoffzelle verbundener, d.h. ein in der Anodengaszufuhrleitung oder der Anodengasabfuhrleitung angeordneter erster Flüssigkeitsabscheider auf einfach Art und Weise über die erste Bypassleitung mit der Kathodengasabfuhrleitung oder mit einem mit dem Kathodenbereich der Brennstoffzelle verbundenen, d.h. einem in der Kathodengaszufuhrleitung oder der Kathodengasabfuhrleitung angeordneten zweiten Flüssigkeitsabscheider verbunden werden. Die Flüssigkeitsabfuhr aus dem Flüssigkeitsauslass des ersten Flüssigkeitsabscheiders erfolgt dann kontinuierlich in Richtung des in dem Brennstoffzellensystem vorliegenden Druckgefälles. In ähnliche Weise kann ein üblicherweise zwischen der Anodengaszufuhrleitung und der Anodengasabfuhrleitung vorliegendes Druckgefälle für die Abfuhr von Flüssigkeit aus dem Flüssigkeitsausfass eines in der Anodengaszufuhrleitung angeordneten ersten Flüssigkeitsabscheiders in einen in der Anodengasabfuhrleitung angeordneten zweiten Flüssigkeitsabscheider genutzt werden. Schließlich liegt auch zwischen der Kathodengaszufuhrleitung und der Kathodengasabfuhrleitung üblicherweise ein Druckgefälle vor, das zur Abfuhr von Flüssigkeit aus dem Flüssigkeitsauslass eines in der Kathodengaszufuhrleitung angeordneten ersten Flüssigkeitsabscheiders in die Kathodengasabfuhrleitung oder einen in der Kathodengasabfuhrleitung angeordneten zweiten Flüssigkeitsabscheider genutzt werden kann.

Falls eine Abfuhr von Flüssigkeit aus dem Flüssigkeitsauslass des ersten Flüssigkeitsabscheiders gegen ein in dem Brennstoffzellensystem vorliegendes Druckgefälle erfolgen soll, umfasst das erfindungsgemäße Brennstoffzellensystem vorzugsweise eine erste Fördereinrichtung zum Fördern von aus dem Flüssigkeitsauslass des ersten Flüssigkeitsabscheiders abzuführender Flüssigkeit in die Kathodengasabfuhrleitung oder den zweiten Flüssigkeitsabscheider. Eine derartige, beispielsweise in Form einer Pumpe ausgebildete erste Fördereinrichtung kann selbstverständlich auch dazu genutzt werden, die Flüssigkeitsabfuhr aus dem Flüssigkeitsauslass des ersten Flüssigkeitsabscheiders zu unterstützen. Dies ist beispielsweise dann vorteilhaft, wenn die Flüssigkeitsabfuhr aus dem Flüssigkeitsauslass des ersten Flüssigkeitsabscheiders in Richtung eines lediglich geringen Druckgefälles oder in Richtung eines Bereichs des Brennstoffzellensystems erfolgen soll, in dem der gleiche Druck vorherrscht wie in der Umgebung des ersten Flüssigkeitsabscheiders.

Vorzugsweise umfasst der zweite Flüssigkeitsabscheider ein Reservoir sowie einen Pegelsensor zur Messung eines Flüssigkeitspegels in dem Reservoir, wobei ein Flüssigkeitsauslass des zweiten Flüssigkeitsabscheiders mit einer Flüssigkeitsabfuhrleitung verbunden ist. Die kontinuierlich aus dem ersten Flüssigkeitsabscheider abgeführte Flüssigkeit kann dann gemeinsam mit der durch den zweiten Flüssigkeitsabscheider aus einem Gasstrom abgeschiedenen Flüssigkeit in dem Reservoir des zweiten Flüssigkeitsabscheiders gesammelt werden.

Bei einer vorteilhaften Ausführungsform des erfindungsgemäßen Brennstoffzellensystems ist in der mit dem Fiüssigkeitsauslass des zweiten Flüssigkeitsabscheiders verbundenen Flüssigkeitsabfuhrleitung ein Ventil angeordnet ist, das dazu eingerichtet ist, die Flüssigkeitsabfuhrleitung freizugeben, wenn der Flüssigkeitspegel in dem Reservoir des zweiten Flüssigkeitsabscheiders eine vorgegebene Höhe erreicht hat. Dadurch kann die im Reservoir des zweiten Flüssigkeitsabscheiders keit, je nach Bedarf, kontrolliert aus dem Reservoir des zweiten Flüssigkeitsabscheider abgeführt werden.

Alternativ dazu kann ein Flüssigkeitsauslass des zweiten Flüssigkeitsabscheiders jedoch auch über eine zweite Bypassleitung mit einem dritten Flüssigkeitsabscheider oder der Kathodengasabfuhrleitung verbunden sein. Bei einer derartigen Anordnung kann auch der zweite Flüssigkeitsabscheider ohne eine separate Anordnung zur Abfuhr von Flüssigkeit aus dem zweiten Flüssigkeitsabscheider, d.h. ohne einen Pegelsensor, ein Ventil sowie eine Steuerung für das Ventil und darüber hinaus, falls gewünscht, auch ohne Reservoir ausgebildet sein. Statt dessen wird die von dem ersten und dem zweiten Flüssigkeitsabscheider abgeschiedene Flüssigkeit kontinuierlich über die zweite Bypassleitung aus dem zweiten Flüssigkeitsabscheider abgeführt. Infolge dessen kann ein besonders einfach und kompakt aufgebauter zweiter Flüssigkeitsabscheider eingesetzt und somit die Anzahl der Einzelkomponenten des Gesamtsystems weiter verringert werden.

Wenn der Flüssigkeitsauslass des zweiten Flüssigkeitsabscheiders über die zweite Bypassleitung mit der Kathodengasabfuhrleitung verbunden ist, wird die von dem ersten und dem zweiten Flüssigkeitsabscheider abgeschiedene Flüssigkeit gemeinsam mit den Kathodenabgasen kontinuierlich aus dem besonders einfach aufgebauten Brennstoffzellensystem abgeführt. Wenn der Flüssigkeitsauslass des zweiten Flüssigkeitsabscheiders über die zweite Bypassleitung mit dem dritten Flüssigkeitsabscheider verbunden ist, wird die von dem ersten und dem zweiten Flüssigkeitsabscheider abgeschiedene Flüssigkeit dagegen kontinuierlich dem dritten Flüssigkeitsabscheider zugeführt.

Wenn der erste Flüssigkeitsabscheider in der Anodengaszufuhrleitung angeordnet ist, sind der zweite und der dritte Flüssigkeitsabscheider vorzugsweise in der beispielsweise als Rezirkulationsleitung ausgebildeten Anodengasabfuhrteitung, der Kathodengasabfuhrleitung oder der Kathodengasabfuhrleitung angeordnet. Beispielsweise kann der zweite Flüssigkeitsabscheider in der Anodengasabfuhrleitung und der dritte Flüssigkeitsabscheider in der Kathodengaszufuhrleitung angeordnet sein.

Alternativ dazu kann der erste Flüssigkeitsabscheider jedoch auch in der beispielsweise als Rezirkulationsleitung ausgebildeten Anodengasabfuhrleitung angeordnet sein. Der zweite und der dritte Flüssigkeitsabscheider sind dann vorzugsweise in der Anodengaszufuhrleitung, der Kathodengaszufuhrleitung oder der Kathodengasabfuhrleitung angeordnet. Ferner kann der erste Flüssigkeitsabscheider in der Kathodengaszufuhrleitung platziert sein, während der zweite und der dritte Flüssigkeitsabscheider in der beispielsweise als Rezirkulationsleitung ausgebildeten Anodengasabfuhrleitung, der Anodengaszufuhrleitung oder der Kathodengasabfuhrleitung angeordnet sind. Schließlich ist es auch möglich, den ersten Flüssigkeitsabscheider in der Kathodengasabfuhrleitung und den zweite und den dritten Flüssigkeitsabscheider in der beispielsweise als Rezirkulationsleitung ausgebildeten Anodengasabfuhrleitung, der Anodengaszufuhrleitung oder der Kathodengaszufuhrleitung anzuordnen.

Bei einer bevorzugten Ausführungsform des erfindungsgemäßen Brennstoffzellensystems ist der zweite Flüssigkeitsabscheider in einem zweiten Bereich des Brennstoffzellensystems angeordnet, in dem ein zweiter Druck vorherrscht. Die zweite Bypassleitung verbindet den Flüssigkeitsauslass des zweiten Flüssigkeitsabscheiders vorzugsweise mit einem dritten Bereich des Brennstoffzellensystems, in dem ein dritter Druck vorherrscht, der geringer ist als der zweite Druck. Eine derartige Anordnung gewährleistet eine einfache eine kontinuierliche Abfuhr der von dem ersten und dem zweiten Flüssigkeitsabscheider abgeschiedenen Flüssigkeit aus dem Flüssigkeitsauslass des zweiten Flüssigkeitsabscheiders in Richtung des in dem Brennstoffzellensystem vorliegenden Druckgefälles.

Da, wie oben erläutert, im Anodenbereich der Brennstoffzelle üblicherweise ein höherer Druck vorherrscht als im Kathodenbereich und darüber hinaus ein Druckgefälle zwischen der Anodengaszufuhrleitung und der Anodengasabfuhrleitung bzw. der Kathodengaszufuhrleitung und der Kathodengasabfuhrleitung vorliegt, können diese zwischen den einzelnen Bereichen des Brennstoffzellensystems vorliegenden Druckdifferenzen besonders effizient genutzt werden, wenn der erste Flüssigkeitsabscheider in der Anodengaszufuhrleitung, der zweite Flüssigkeitsabscheider in der Anodengasabfuhrleitung und der dritte Flüssigkeitsabscheider in der Kathodengaszufuhrleitung oder der Kathodengasabfuhrleitung angeordnet ist.

In dem erfindungsgemäßen Brennstoffzellensystem kann eine, beispielsweise in Form einer Pumpe ausgebildete zweite Fördereinrichtung zum Fördern von aus dem Flüssigkeitsauslass des zweiten Flüssigkeitsabscheiders abzuführender Flüssigkeit in die Kathodengasabfuhrleitung oder den dritten Flüssigkeitsabscheider vorhanden sein. Die Bereitstellung einer zweiten Fördereinrichtung ist insbesondere dann sinnvoll, wenn die Abfuhr von Flüssigkeit aus dem Flüssigkeitsauslass des zweiten Flüssigkeitsabscheiders gegen ein in dem Brennstoffzellensystem vorliegendes Druckgefälle erfolgen soll oder die Flüssigkeitsabfuhr aus dem Flüssigkeitsauslass des zweiten Flüssigkeitsabscheiders in Richtung eines lediglich geringen Druckgefälles oder in Richtung eines Bereichs des Brennstoffzellensystems unterstützt werden soll, in dem der gleiche Druck vorherrscht wie in der Umgebung des zweiten Flüssigkeitsabscheiders.

Vorzugsweise umfasst der dritte Flüssigkeitsabscheider ein Reservoir sowie einen Pegelsensor zur Messung eines Flüssigkeitspegels in dem Reservoir, wobei ein Flüssigkeitsauslass des dritten Flüssigkeitsabscheiders mit einer Flüssigkeitsabfuhrleitung verbunden ist. Die kontinuierlich aus dem ersten und dem zweiten Flüssigkeitsabscheider abgeführte Flüssigkeit kann dann gemeinsam mit der durch den dritten Flüssigkeitsabscheider aus einem Gasstrom abgeschiedenen Flüssigkeit in dem Reservoir des dritten Flüssigkeitsabscheiders gesammelt werden.

In der mit dem Flüssigkeitsauslass des dritten Flüssigkeitsabscheiders verbundenen Flüssigkeitsabfuhrleitung kann ein Ventil angeordnet sein, das dazu eingerichtet ist, die Fiüssigkeitsabfuhrleitung freizugeben, wenn der Flüssigkeitspegel in dem Reservoir des zweiten Flüssigkeitsabscheiders eine vorgegebene Höhe erreicht hat. Dadurch kann das im Reservoir des dritten Flüssigkeitsabscheiders gesammelte Wasser, je nach Bedarf, kontrolliert aus dem Reservoir des dritten Flüssigkeitsabscheider abgeführt werden.

Alternativ dazu kann ein Flüssigkeitsauslass des dritten Flüssigkeitsabscheiders jedoch auch über eine dritte Bypassleitung mit der Kathodengasabfuhrleitung verbunden sein. Bei einer derartigen Anordnung kann auch der dritte Flüssigkeitsabscheider ohne eine separate Anordnung zur Abfuhr von Flüssigkeit aus dem dritten Flüssigkeitsabscheider, d.h. ohne einen Pegelsensor, ein Ventil sowie eine Steuerung für das Ventil und darüber hinaus, falls gewünscht, auch ohne ein Reservoir ausgebildet sein. Statt dessen wird die von dem ersten, dem zweiten und dem Flüssigkeitsabscheider abgeschiedene Flüssigkeit kontinuierlich über die dritte Bypassleitung aus dem dritten Flüssigkeitsabscheider abgeführt, so dass auch ein besonders einfach und kompakt aufgebauter dritter Flüssigkeitsabscheider eingesetzt und somit die Anzahl der Einzelkomponenten des Gesamtsystems weiter verringert werden kann. Wenn der erste Flüssigkeitsabscheider in der Anodengaszufuhrleitung, der zweite Flüssigkeitsabscheider in der Anodengasabfuhrleitung und der dritte Flüssigkeitsabscheider in der Kathodengaszufuhrleitung angeordnet ist und darüber hinaus der Flüssigkeitsauslass des dritten Flüssigkeitsabscheiders mit der Kathodengasabfuhrleitung verbunden ist, können die oben beschriebenen zwischen den einzelnen Bereichen des Brennstoffzeliensystems voriiegenden Druckdifferenzen besonders effizient zur Abfuhr von Flüssigkeit aus den einzelnen Flüssigkeitsabscheidern genutzt werden. Es kann jedoch auch eine beispielsweise in Form einer Pumpe ausgebildete dritte Fördereinrichtung zum Fördern der aus dem Flüssigkeitsauslass des dritten Flüssigkeitsabscheiders abzuführenden Flüssigkeit vorhanden sein.

Es versteht sich, dass die Flüssigkeitsabscheider auch dann, wenn das Brennstoffzellensystem mehr als drei Flüssigkeitsabscheider umfasst, über jeweilige Bypassleitungen in der Art einer Reihenschaltung miteinander verbunden sein können, wobei der Flüssigkeitsauslass des in der Reihenschaltung "letzten" Flüssigkeitsabscheiders, wie oben beschrieben, mit der Kathodengasabfuhrleitung oder einer Flüssigkeitsabfuhrleitung verbunden sein kann. Ebenso ist es möglich, eine erste Anzahl von Flüssigkeitsabscheidern über jeweilige Bypassleitungen in der Art einer Parallelschaltung mit einer zweiten Anzahl von Flüssigkeitsabscheidern oder einem ausgewählten Flüssigkeitsabscheider zu verbinden, deren/dessen Flüssigkeitsauslass, wie oben beschrieben, mit der Kathodengasabfuhrleitung oder einer Flüssigkeitsabfuhrleitung verbunden sein kann.

Die Verbindung des Flüssigkeitsauslasses eines Flüssigkeitsabscheiders mit der Kathodengasabfuhrleitung ist insbesondere dann sinnvoll, wenn ein besonders einfacher und kompakter Aufbau des Brennstoffzellensystems angestrebt wird. Wenn dieser Flüssigkeitsabscheider oder ein mit diesem Flüssigkeitsabscheider beispielsweise in der Art einer Reihenschaltung verbundener anderer Flüssigkeitsabscheider in der Anodengaszufuhrleitung oder der Anodengasabfuhrleitung angeordnet ist, um Flüssigkeit aus einem dem Anodenbereich der Brennstoffzelle zugeführten oder einem aus dem Anodenbereich der Brennstoffzelle abgeführten Gasstrom zu entfernen, kann eine derartige Anordnung jedoch unter Umständen zu einem Eintrag von Wasserstoff in die Kathodenabgase und somit zu unerwünschten Wasserstoffemissionen führen. Zur Vermeidung derartiger Wasserstoffemissionen ist der Flüssigkeitsauslass dieses Flüssigkeitsabscheiders daher vorzugsweise, wie oben beschrieben, mit einer separaten Flüssigkeitsabfuhrleitung verbunden.

Die erste Bypassleitung mündet vorzugsweise in eine mit dem Einlass des zweiten Flüssigkeitsabscheiders verbundene Fluidleitung, d.h. je nach Anordnung des zweiten Flüssigkeitsabscheiders beispielsweise in die Anodengaszufuhrleitung, die Anodengasabfuhrleitung, die Kathodengaszufuhrleitung oder die Kathodengasabfuhrleitung. Wenn der zweite Flüssigkeitsabscheider in der Kathodengaszufuhrleitung angeordnet ist, kann stromaufwärts des zweiten Flüssigkeitsabscheiders in der Kathodengasabfuhrleitung ein Kompressor zum Verdichten der dem Kathodenbereich der Brennstoffzelle zuzuführenden Luft vorgesehen sein. Die erste Bypassleitung ist dann vorzugsweise stromaufwärts des Kompressors mit der Kathodengaszufuhrleitung verbunden, da in diesem Bereich der Kathodengaszufuhrleitung ein besonders geringer Druck vorherrscht. Das zwischen verschiedenen Bereichen des Brennstoffzellensystems vorhandene Druckgefälle kann dann optimal zu Abfuhr der Flüssigkeit aus dem Flüssigkeitsauslass des ersten Flüssigkeitsabscheiders genutzt werden.

Alternativ dazu kann die erste Bypassleitung jedoch auch unmittelbar mit dem zweiten Flüssigkeitsabscheider verbunden sein und z.B. in ein Reservoir des zweiten Flüssigkeitsabscheiders münden.

In ähnlicher Weise mündet die zweite Bypassleitung vorzugsweise in eine mit dem Einlass des dritten Flüssigkeitsabscheiders verbundene Fluidleitung, d.h. je nach Anordnung des dritten Flüssigkeitsabscheiders beispielsweise in die Anodengaszufuhrleitung, die Anodengasabfuhrleitung, die Kathodengaszufuhrleitung oder die Kathoden-- gasabfuhrleitung. Wenn der dritte Flüssigkeitsabscheider in der Kathodengaszufuhrleitung angeordnet ist, ist die dritte Bypassleitung vorzugsweise stromaufwärts des ebenfalls in der Kathodengaszufuhrleitung angeordneten Kompressors zum Verdichten der dem Kathodenbereich der Brennstoffzelle zuzuführenden Luft mit der Kathodengaszufuhrleitung verbunden. Der in diesem Bereich vorherrschende geringe Druck kann dann optimal zur Abfuhr der Flüssigkeit aus dem Flüssigkeitsauslass des zweiten Flüssigkeitsabscheiders genutzt werden.

Alternativ dazu kann die zweite Bypassleitung jedoch auch unmittelbar mit dem dritten Flüssigkeitsabscheider verbunden sein und z.B. in ein Reservoir des dritten Flüssigkeitsabscheiders münden.

Vorzugsweise ist in der ersten, der zweiten und/oder der dritten Bypassleitung eine Blende vorgesehen. Im Betrieb des erfindungsgemäßen Brennstoffzellensystems können Betriebszustände auftreten, in denen von einem Flüssigkeitsabscheider, der über eine Bypassleitung mit einem weiteren Flüssigkeitsabscheider oder der Kathodengasabfuhrleitung verbunden ist, für eine gewisse Zeitspanne keine Flüssigkeit abgeschieden wird. Während dieser Zeitspanne kann es zu einem Austritt von Gasen aus der mit dem Flüssigkeitsabscheider verbundenen Fluidleitung in die Bypassleitung kommen. So kann beispielsweise dann, wenn der erste Flüssigkeitsabscheider in der Anodengaszufuhrleitung angeordnet ist und während bestimmter Betriebphasen des Brennstoffzellensystems keine Flüssigkeit abscheidet, ein Leck von dem Anodenbereich der Brennstoffzelle zuzuführenden Anodengasen in die erste Bypassieitung auftreten. Die in der ersten, der zweiten und/oder der dritten Bypassleitung vorgesehene Blende stellt sicher, dass dieses Leck von Gasen in die erste, die zweite und/oder die dritte Bypassleitung möglichst gering gehalten wird. Vorzugsweise ist die Blende so gestaltet, dass das Strömungsvolumen durch die erste, die zweite und/oder die dritte Bypassleitung weniger als 5% des durch die jeweilige Fluidleitung geförderten Strömungsvolumens beträgt und weist einen zu durchströmenden Durchmesser von weniger als 1,5 mm auf. Vorzugsweise liegt der zu durchströmende Durchmesser der Blende im Bereich von 1 bis 1,5 mm. Insbesondere bevorzugt ist ein Durchmesser von 1,1 mm.

Alternativ oder zusätzlich dazu kann in der ersten, der zweiten und/oder der dritten Bypassleitung auch ein flüssigkeitsgefülltes U-Rohr angeordnet sein. Vorzugsweise ist das U-Rohr mit Wasser gefüllt, wobei die Wassersäule in dem U-Rohr einen über die Höhe der Wassersäule einstellbaren Druck bereitstellt, der einer in die erste, die zweite und/oder die dritte Bypassleitung eindringenden Leckgasströmung entgegenwirkt. Aus dem Flüssigkeitsauslass des ersten, des zweiten und/oder des dritten Flüssigkeitsabscheiders abzuführende Flüssigkeit kann dagegen problemlos durch das U-Rohr geleitet und einem stromabwärts des U-Rohr angeordneten Flüssigkeitsabscheider oder der Kathodengasabfuhrleitung zugeführt werden.

Bei einer vorteilhaften Ausführungsform des erfindungsgemäßen Brennstoffzellensystems sind Mittel zum Beheizen der zweiten und/oder der dritten Bypassleitung vorgesehen. Um das Leck von Gasen in die erste, die zweite und/oder die dritte Bypassleitung möglichst gering zu halten, weisen die erste, die zweite und/oder die dritte Bypassleitung vorzugsweise einen verhältnismäßig geringen Durchmesser auf, der im Bereich der Blende, wie oben beschrieben vorzugsweise kleiner als 1,5 mm ist. Bei tiefen Temperaturen kann daher davon ausgegangen werden, dass die Bypassleitungen und/oder die Blenden im Stillstand des Brennstoffzellensystems durch gefrierendes Wasser blockiert werden. Dieses Problem kann durch die Bereitstellung beispielsweise elektrisch beheizter Bypassleitungen beseitigt werden.

Alternativ oder zusätzlich dazu kann/können der erste, der zweite und/oder der dritte Flüssigkeitsabscheider, ein Reservoir aufweisen, das so dimensioniert ist, dass es aus dem Flüssigkeitsabscheider/den Flüssigkeitsabscheidern abzuführende Flüssigkeit so lange speichern kann, bis die erste, die zweite und/oder die dritte Bypassleitung und/oder die erste, die zweite und/oder die dritte Blende im Betrieb des Brennstoffzellensystems ausreichend aufgeheizt worden ist/sind, um auch bei tiefen, unter dem Gefrierpunkt liegenden Temperaturen eine ordnungsgemäße Abfuhr der Flüssigkeit aus dem Flüssigkeitsabscheider/den Flüssigkeitsabscheidern zu gewährleisten.

Bevorzugte Ausführungsformen des erfindungsgemäßen Brennstoffzellensystems werden im Folgenden anhand der beigefügten schematischen Zeichnungen näher erläutert, von denen
- Fig. 1: ein aus dem Stand der Technik bekanntes Brennstoffzellensystem zeigt,
- Fig. 2: ein erstes Ausführungsbeispiel eines erfindungsgemäßen Brennstoffzel- lensystems zeigt,
- Fig. 3: ein zweites Ausführungsbeispiel eines erfindungsgemäßen Brennstoffzellensystems zeigt,
- Fig. 4: ein drittes Ausführungsbeispiel eines erfindungsgemäßen Brennstoffzel- lensystems zeigt,
- Fig. 5: ein viertes Ausführungsbeispiel eines erfindungsgemäßen Brennstoffzel- lensystems zeigt und
- Fig. 6: ein fünftes Ausführungsbeispiel eines erfindungsgemäßen Brennstoffzel- lensystems zeigt.

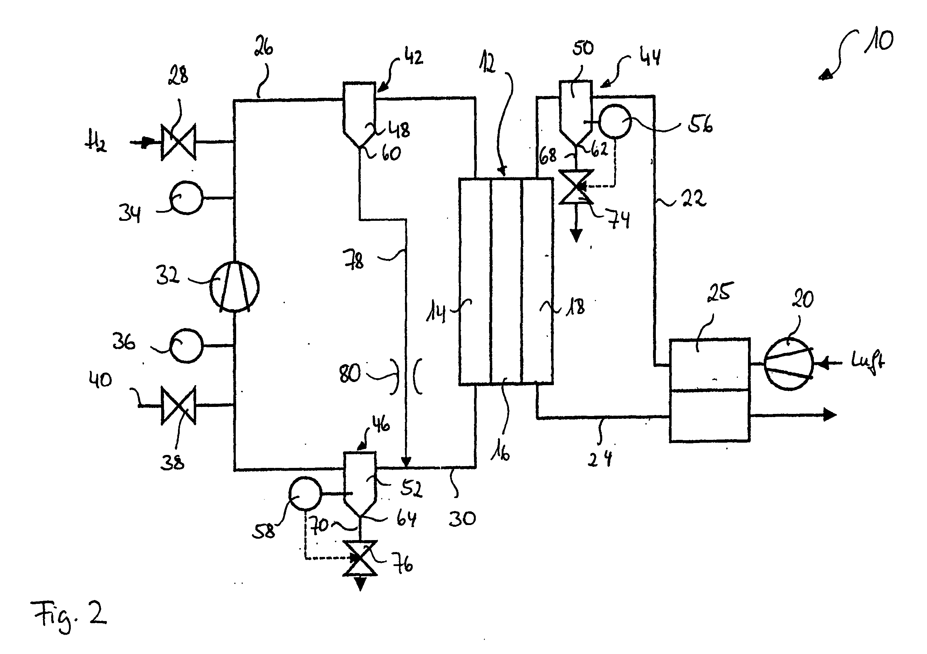

Wie das oben beschriebene und in der Fig. 1 veranschaulichte bekannte Brennstoffzellensystem umfasst auch das in der Fig. 2 gezeigte Brennstoffzellensystem 10 eine Brennstoffzelle 12 mit einem Anodenbereich 14, der durch einen Elektrolyt 16 von einem Kathodenbereich 18 getrennt ist. Obwohl in der Fig. 2 lediglich eine einzige Brennstoffzelle 12 gezeigt ist, weist das Brennstoffzellensystem 10 eine Mehrzahl von Brennstoffzellen 12 auf, die zur Bildung eines sogenannten Brennstoffzellenstacks übereinander gestapelt sind.

Dem Kathodenbereich 18 der Brennstoffzelle 12 wird mit Hilfe eines Kompressors 20 über eine Kathodengaszufuhrleitung 22 Luft zugeführt. Zur Abfuhr von Kathodenabgasen ist der Kathodenbereich 18 der Brennstoffzelle 12 ferner mit einer Kathodengasabfuhrleitung 24 verbunden. Ein beispielsweise als Gas zu Gas Membranbefeuchter ausgebildetes Befeuchtungssystem 25 steht mit der Kathodengaszufuhrleitung 22 und der Kathodengasabfuhrleitung 24 in Verbindung.

Der Anodenbereich 14 der Brennstoffzelle 12 steht dagegen mit einer Anodengaszufuhrleitung 26 in Verbindung, durch die dem Anodenbereich 14 Wasserstoff zugeführt wird. Zur Dosierung der Wasserstoffzufuhr in den Anodenbereich 14 ist in der Anodengaszufuhrleitung 26 ein erstes Ventil 28 angeordnet. Eine Anodengasabfuhrleitung 30 ist als Rezirkulationsleitung ausgebildet, in der ein Rezirkulationsgebläse 32 angeordnet ist, um aus dem Anodenbereich 14 der Brennstoffzelle 12 austretende Anodenabgase im Kreislauf zu führen. In der als Rezirkulationsleitung ausgebildeten Anodengasabfuhrleitung 30 sind Sensoren 34, 36 vorgesehen, um den Druck, die Temperatur und die relative Feuchte der Anodenabgase sowie die Wasserstoffkonzentration in den Anodenabgasen zu messen. Darüber hinaus steht die Anodengasabfuhrleitung 30 über ein zweites Ventil 38 mit einer Spülleitung 40 in Verbindung. Nach dem Abschalten des Brennstoffzellensystems kann das zweite Ventil 38 geöffnet und der Anodenbereich 14 der Brennstoffzelle 12 mit einem durch die Spülleitung 40 zugeführten Spülgas, beispielsweise Luft, gespült werden.

Um zu verhindern, dass flüssiges Wasser in den Anodenbereich 14 der Brennstoffzelle 12 eindringt und in diesem Bereich vorhandene Reaktandenströmungskanäle blockiert, ist in der Anodengaszufuhrleitung 26 ein erster Flüssigkeitsabscheider 42 angeordnet. Ein zweiter Flüssigkeitsabscheider 46 ist in der Anodengasabfuhrleitung vorgesehen, um nachgeschaltete Komponenten, beispielsweise die Sensoren 34, 36 und das Rezirkualtionsgebläse 32, bei tiefen Temperaturen vor Schäden durch gefrierendes Wasser zu schützen. Ein in der Kathodengaszufuhrleitung 22 angeordneter dritter Flüssigkeitsabscheider 44 verhindert das Eindringen von flüssigem Wasser in den Kathodenbereich 18 der Brennstoffzelle 12.

Die Flüssigkeitsabscheider 44, 46 umfassen jeweils ein Reservoir 50, 52 und sind mit einem Pegelsensor 56, 58 zur Messung des Flüssigkeitspegels in dem Reservoir 50, 52 ausgestattet. Ein Flüssigkeitsauslass 62, 64 der Flüssigkeitsabscheider 44, 46 ist jeweils mit einer Flüssigkeitsabfuhrleitung 68, 70 verbunden, in der jeweils ein Ventil 74, 76 vorgesehen ist. Wenn ein Pegelsensor 56, 58 anzeigt, dass der Wasserpegel in dem Reservoir 50, 52 des zugehörigen Flüssigkeitsabscheiders 44, 46 eine vorgegebene Höhe erreicht hat, wird das diesem Flüssigkeitsabscheider 44, 46 zugeordnete Ventil 74, 76 geöffnet, so dass das in dem Reservoir 50, 52 gesammelte Wasser durch den Flüssigkeitsauslass 62, 64 und die Flüssigkeitsabfuhrleitung 68, 70 aus dem Brennstoffzellensystem 10 abgeführt werden kann.

Im Gegensatz dazu ist der erste Flüssigkeitsabscheider 42 weder mit einem Pegelsensor noch mit einem zugeordneten Ventil ausgestattet. Statt dessen ist ein Flüssigkeitsauslass 60 des ersten Flüssigkeitsabscheiders 42 über eine elektrisch beheizbare erste Bypassleitung 78 stromaufwärts des zweiten Flüssigkeitsabscheiders 46 mit der Anodengasabfuhrleitung 30 verbunden. In der ersten Bypassleitung 78 ist eine erste Blende 80 vorgesehen, die so gestaltet ist, dass das Strömungsvolumen in der ersten Bypassleitung 78 weniger als 5% des durch die Anodengaszufuhrleitung 26 geförderten Strömungsvolumens beträgt. Die erste Blende 80 weist einen zu durchströmenden Durchmesser von 1,1 mm auf.

Im Betrieb des Brennstoffzellensystems 10 wird von dem ersten Flüssigkeitsabscheider 42 abgeschiedenes Wasser unter Ausnutzung eines zwischen der Anodengaszufuhrleitung 26 und der Anodengasabfuhrleitung 30 vorhandenen Druckgefälles kontinuierlich über die erste Bypassleitung 78 aus einem Reservoir 48 des ersten Flüssigkeitsabscheiders 42 in die Anodengasabfuhrleitung 30 geleitet und dem zweiten Flüssigkeitsabscheider 46 zugeführt. In Betriebsphasen, in denen von dem ersten Flüssigkeitsabscheider 42 kein Wasser aus dem dem Anodenbereich 14 der Brennstoffzelle 12 zuzuführenden Gasstrom abgeschieden und über die erste Bypassleitung 78 abgeführt wird, gewährleistet die erste Blende 80, dass ein Leck von Gasen aus der Anodengaszufuhrleitung 26 in die erste Bypassleitung 78 möglichst gering gehalten wird.

Aufgrund der geringen Strömungsquerschnitte der ersten Bypassleitung 78 und insbesondere der ersten Blende 80 ist bei tiefen Temperaturen davon auszugehen, dass die erste Bypassleitung 78 und/oder die erste Blenden 80 im Stillstand des Brennstoffzellensystems durch gefrierendes Wasser blockiert werden. Das Reservoir 48 des ersten Flüssigkeitsabscheiders 42, ist daher so dimensioniert ist, dass es dazu in der Lage ist, aus dem durch die Anodengaszufuhrleitung 26 geleiteten Gasstrom abgeschiedenes und durch die erste Bypassleitung 78 abzuführendes Wasser so lange zu speichern, bis die erste Bypassleitung 78 durch die elektrische Beheizung und/oder die im Betrieb des Brennstoffzellensystems 10 entstehende Wärme ausreichend aufgeheizt worden ist, um eine etwaige durch Eis gebildete Blockade der ersten Bypassleitung 78 und/oder der ersten Blende 80 zu beseitigen.

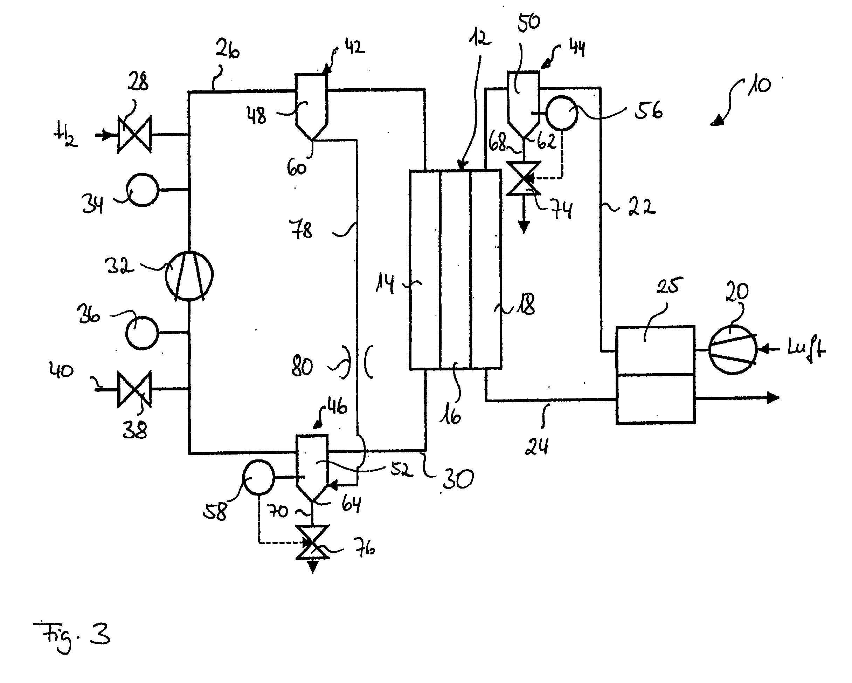

Das in der Fig. 3 gezeigte Brennstoffzellensystem 10 unterscheidet sich von der in der Fig. 2 dargestellten Anordnung dadurch, das die erste Bypassleitung 78 nicht in die Anodengasabfuhrleitung 30 mündet, sondern unmittelbar mit dem Reservoir 50 des zweiten Flüssigkeitsabscheiders 46 verbunden ist. Im übrigen entspricht der Aufbau und die Funktion des in Fig. 3 gezeigten Brennstoffzellensystems 10 dem Aufbau und der Funktion der in der Fig. 2 dargestellten Anordnung.

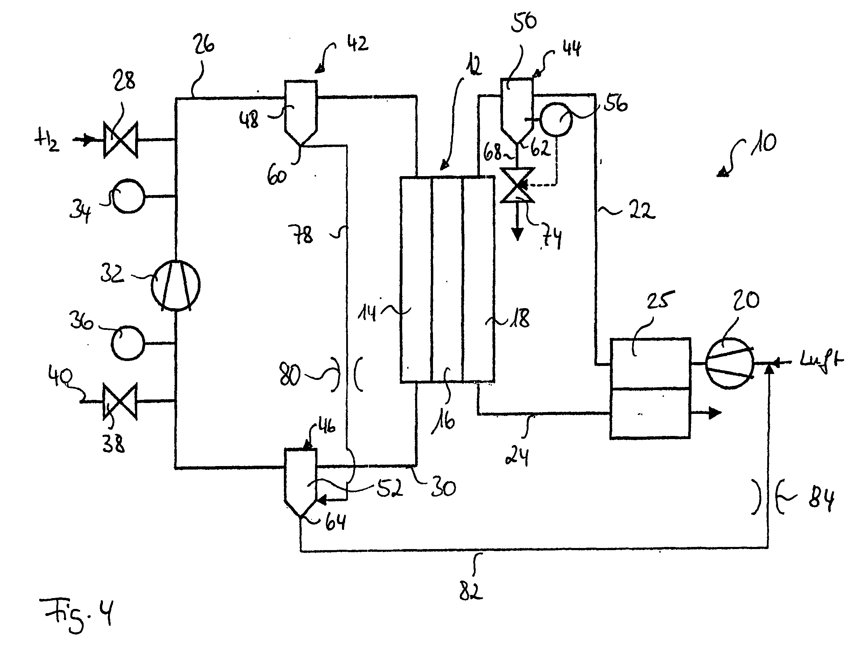

Das in der Fig. 4 gezeigte Brennstoffzellensystem 10 unterscheidet sich von der in der Fig. 3 dargestellten Anordnung dadurch, dass auch der in der Anodengasabfuhrleitung 30 angeordnete zweite Flüssigkeitsabscheider 46 weder mit einem Pegelsensor noch mit einem zugeordneten Ventil ausgestattet ist. Statt dessen ist der Flüssigkeitsauslass 64 des zweiten Flüssigkeitsabscheiders 46 über eine elektrisch beheizbare zweite Bypassleitung 82 stromaufwärts des in der Kathodengaszufuhrleitung 22 vorgesehenen Kompressors 20 mit der Kathodengaszufuhrleitung 22 verbunden. In der zweiten Bypassleitung 82 ist eine zweite Blende 84 vorgesehen, die so gestaltet ist, dass das Strömungsvolumen in der zweiten Bypassleitung 82 weniger als 5% des durch die Anodengasabfuhrleitung 30 geförderten Strömungsvolumens beträgt und die einen zu durchströmenden Durchmesser von 1,1 mm aufweist.

Im Betrieb des Brennstoffzellensystems 10 wird von dem ersten Flüssigkeitsabscheider 42 abgeschiedenes Wasser unter Ausnutzung des zwischen der Anodengaszufuhrleitung 26 und der Anodengasabfuhrleitung 30 vorhandenen Druckgefälles kontinuierlich über die erste Bypassleitung 78 aus dem Reservoir 48 des ersten Flüssigkeitsabscheiders 42 geleitet und dem Reservoir 52 zweiten Flüssigkeitsabscheider 46 zugeführt. Gleichzeitig erfolgt eine kontinuierliche Abfuhr von Wasser aus dem Reservoir 52 des zweiten Flüssigkeitsabscheiders 46 über die zweite Bypassleitung 82 in die Kathodengaszufuhrleitung 22. Da im Bereich des Kompressor 20 ein besonders geringer Druck vorherrscht, kann das zwischen der Anodengasabfuhrleitung 30 und dem stromaufwärts des Kompressors 20 angeordneten Bereich der Kathodengaszufuhrleitung 22 vorliegende Druckgefälle optimal zur Abfuhr des Wassers aus dem Flüssigkeitsauslass 64 des zweiten Flüssigkeitsabscheiders 46 genutzt werden. Anschließend wird das durch die zweite Bypassleitung 82 in die Kathodengaszufuhrleitung 22 geleitete Wasser durch den Kompressor 20 gemeinsam mit dem dem Kathodenbereich 18 der Brennstoffzelle 12 zuzuführenden Luftstrom in den dritten Flüssigkeitsabscheider 44 gefördert. Die zweite Blende 84 gewährleistet, dass in Betriebsphasen, in denen kein Wasser aus dem ersten oder dem zweiten Flüssigkeitsabscheider 42, 46 über die zweite Bypassleitung 82 abgeführt wird, ein Leck von Gasen aus der Anodengasabfuhrleitung 30 in die zweite Bypassleitung 82 möglichst gering gehalten wird.

Wie das Reservoir 48 des ersten Flüssigkeitsabscheiders 42 ist auch das Reservoir 52 des zweiten Flüssigkeitsabscheiders 46, so dimensioniert, dass es dazu in der Lage ist, durch die zweite Bypassleitung 82 abzuführendes Wasser so lange zu speichern, bis die zweite Bypassleitung 82 durch die elektrische Beheizung und/oder die im Betrieb des Brennstoffzellensystems 10 entstehende Wärme ausreichend aufgeheizt worden ist, um eine etwaige durch Eis gebildete Blockade der zweiten Bypassleitung 82 und/oder der zweiten Blende 84 zu beseitigen.

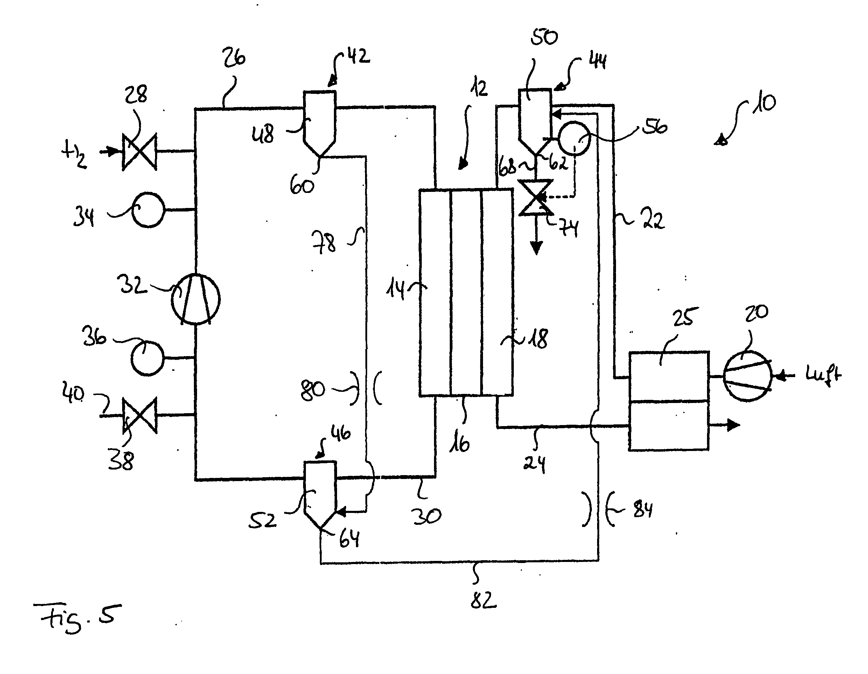

Das in der Fig. 5 gezeigte Brennstoffzellensystem 10 unterscheidet sich von der in der Fig. 4 dargestellten Anordnung dadurch, das die zweite Bypassleitung 82 nicht stromaufwärts des Kompressors 20 in die Kathodengaszufuhrleitung 22 mündet, sondern unmittelbar mit dem Reservoir 50 des dritten Flüssigkeitsabscheiders 44 verbunden ist. Die Druckverhältnisse in dem Brennstoffzellensystem 10 sind dabei so eingestellt, dass der in der Anodengasabfuhrleitung 30 vorherrschende Druck den im Bereich des dritten Flüssigkeitsabscheiders 44 vorherrschenden Druck überschreitet und somit eine ordnungsgemäße Abfuhr von Wasser aus dem Flüssigkeitsauslass 64 des zweiten Flüssigkeitsabscheiders 46 in den dritten Flüssigkeitsabscheider 44 gewährleistet ist. Im übrigen entspricht der Aufbau und die Funktion des in Fig. 5 gezeigten Brennstoffzellensystems 10 dem Aufbau und der Funktion der in der Fig. 4 dargestellten Anordnung.

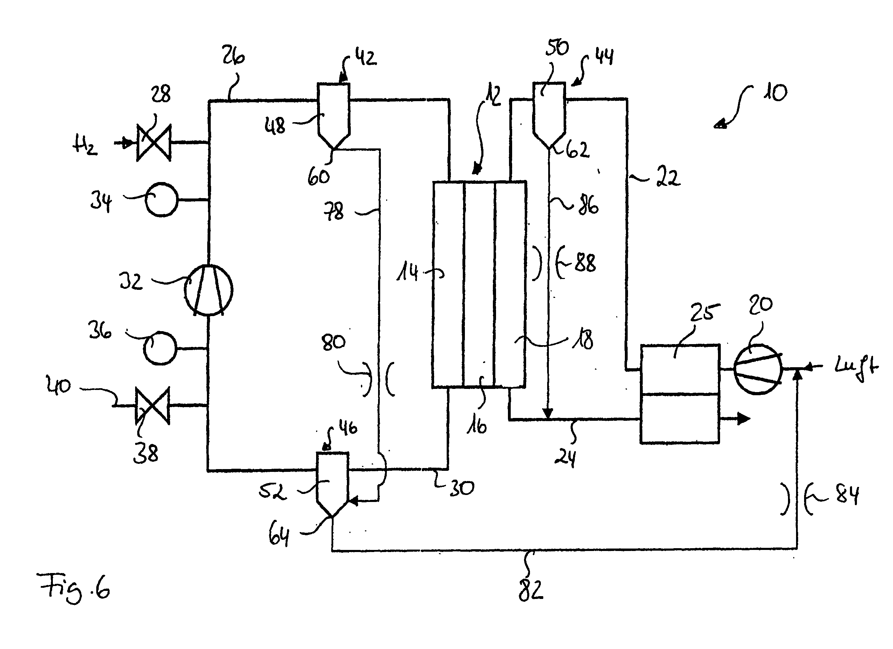

Das in der Fig. 6 gezeigte, besonders einfach aufgebaute Brennstoffzellensystem 10 unterscheidet sich von der in der Fig. 4 dargestellten Anordnung dadurch, dass auch der in der Kathodengaszufuhrleitung 22 angeordnete dritte Flüssigkeitsabscheider 44 nicht länger mit einem Pegelsensor und einem zugeordneten Ventil ausgestattet ist. Statt dessen ist der Flüssigkeitsauslass 62 des dritten Flüssigkeitsabscheiders 44 über eine elektrisch beheizbare dritte Bypassleitung 86 mit der Kathodengasabfuhrleitung 24 verbunden. In der dritten Bypassleitung 86 ist eine dritte Blende 88 vorgesehen, die so gestaltet ist, dass das Strömungsvolumen in der dritten Bypassleitung 86 weniger als 5% des durch die Kathodengaszufuhrleitung 22 geförderten Strömungsvolumens beträgt und die einen zu durchströmenden Durchmesser von 1,1 mm aufweist.

Im Betrieb des Brennstoffzellensystems 10 wird von dem ersten Flüssigkeitsabscheider 42 abgeschiedenes Wasser unter Ausnutzung des zwischen der Anodengaszufuhrleitung 26 und der Anodengasabfuhrleitung 30 vorhandenen Druckgefälles kontinuierlich über die erste Bypassleitung 78 aus einem Reservoir 48 des ersten Flüssigkeitsabscheiders 42 in die Anodengasabfuhrleitung 30 geleitet und dem zweiten Flüssigkeitsabscheider 46 zugeführt. Gleichzeitig erfolgt eine kontinuierliche Abfuhr von Wasser aus dem Reservoir 52 des zweiten Flüssigkeitsabscheiders 46 über die zweite Bypassleitung 82 in die Kathodengaszufuhrleitung 22. Da im Bereich des Kompressor 20 ein besonders geringer Druck vorherrscht, kann das zwischen der Anodengasabfuhrleitung 30 und dem stromaufwärts des Kompressors 20 angeordneten Bereich der Kathodengaszufuhrleitung 22 vorliegende Druckgefälle optimal zur Abfuhr des Wassers aus dem Flüssigkeitsauslass 64 des zweiten Flüssigkeitsabscheiders 46 genutzt werden. Anschließend wird das durch die zweite Bypassleitung 82 in die Kathodengaszufuhrleitung 22 geleitete Wasser durch den Kompressor 20 gemeinsam mit dem dem Kathodenbereich 18 der Brennstoffzelle 12 zuzuführenden Luftstrom in den dritten Flüssigkeitsabscheider 44 gefördert. Schließlich erfolgt auch die Abfuhr von Wasser aus dem Reservoir 50 des dritten Flüssigkeitsabscheiders 44 in kontinuierlicher Art und Weise und unter Ausnutzung eines zwischen der Kathodengaszufuhrleitung 22 und der Kathodengasabfuhrleitung 24 vorhandenen Druckgefälles über die dritte Bypassleitung 86 in die Kathodengasabfuhrleitung 26. Die dritte Blende 84 gewährleistet, dass in Betriebsphasen, in denen kein Wasser aus dem ersten, dem zweiten und/oder dem dritten Flüssigkeitsabscheider 42, 46, 44 über die dritte Bypassleitung 86 abgeführt wird, ein Leck von Gasen aus der Kathodengaszufuhrleitung 22 in die dritte Bypassleitung 86 möglichst gering gehalten wird.

Wie die Reservoirs 48, 52 des ersten und des zweiten Flüssigkeitsabscheiders 42, 46 ist auch das Reservoir 50 des dritten Flüssigkeitsabscheiders 44, so dimensioniert, dass es dazu in der Lage ist, durch die dritte Bypassleitung 86 abzuführendes Wasser so lange zu speichern, bis die dritte Bypassleitung 86 durch die elektrische Beheizung und/oder die im Betrieb des Brennstoffzellensystems 10 entstehende Wärme ausreichend aufgeheizt worden ist, um eine etwaige durch Eis gebildete Blockade der dritten Bypassleitung 86 und/oder der dritten Blende 88 zu beseitigen.

## Patentansprüche

1. Brennstoffzellensystem (10) mit
- mindestens einer Brennstoffzelle (12), die einen Anodenbereich (14) sowie einen durch einen Elektrolyt (16) von dem Anodenbereich (14) getrennten Kathodenbereich (18) aufweist, und
- einem ersten Flüssigkeitsabscheider (42),
wobei ein Flüssigkeitsauslass (60) des ersten Flüssigkeitsabscheiders (42) über eine erste Bypassleitung (78) mit einem zweiten Flüssigkeitsabscheider (46) oder einer Kathodengasabfuhrleitung (24) verbunden ist,
**dadurch gekennzeichnet, dass** Mittel zum Beheizen der ersten Bypassleitung (78) vorhanden sind.

2. Brenristoffzellensystem nach Anspruch 1,
**dadurch gekennzeichnet, dass** der erste Flüssigkeitsabscheider (42) in einem ersten Bereich des Brennstoffzellensystems (10) angeordnet ist, in dem ein erster Druck vorherrscht, und dass die erste Bypassleitung (78) den Flüssigkeitsauslass (60) des ersten Flüssigkeitsabscheiders (42) mit einem zweiten Bereich des Brennstoffzellensystems (10) verbindet, in dem ein zweiter Druck vorherrscht, der geringer ist als der erste Druck.

3. Brennstoffzellensystem nach Anspruch 1 oder 2,
**dadurch gekennzeichnet, dass** eine erste Fördereinrichtung zum Fördern von aus dem Flüssigkeitsauslass (60) des ersten Flüssigkeitsabscheiders (42) abzuführender Flüssigkeit in die Kathodengasabfuhrleitung (24) oder den zweiten Flüssigkeitsabscheider (46) vorhanden ist.

4. Brennstoffzellensystem nach einem der Ansprüche 1 bis 3,
**dadurch gekennzeichnet, dass** der zweite Flüssigkeitsabscheider (46) ein Reservoir (52) sowie einen Pegelsensor (58) zur Messung eines Flüssigkeitspegels in dem Reservoir (52) umfasst, wobei ein Flüssigkeitsauslass (64) des zweiten Flüssigkeitsabscheiders (46) mit einer Flüssigkeitsabfuhrleitung (70) verbunden ist.

5. Brennstoffzellensystem nach Anspruch 4,
**dadurch gekennzeichnet, dass** in der mit dem Flüssigkeitsauslass (64) des zweiten Flüssigkeitsabscheiders (46) verbundenen Flüssigkeitsabfuhrfeitung (70) ein Ventil (76) angeordnet ist, das die Flüssigkeitsabfuhrleitung (70) freigibt, wenn der Flüssigkeitspegel in dem Reservoir (52) des zweiten Flüssigkeitsabscheiders (46) eine vorgegebene Höhe erreicht hat.

6. Brennstoffzellensystem nach einem der Ansprüche 1 bis 3,
**dadurch gekennzeichnet, dass** ein Flüssigkeitsauslass (64) des zweiten Flüssigkeitsabscheiders (46) über eine zweite Bypassleitung (82) mit einem dritten Flüssigkeitsabscheider (44) oder der Kathodengasabfuhrleitung (24) verbunden ist.

7. Brennstoffzellensystem nach Anspruch 6,
**dadurch gekennzeichnet, dass** der zweite Flüssigkeitsabscheider (46) in einem zweiten Bereich des Brennstoffzellensystems (10) angeordnet ist, in dem ein zweiter Druck vorherrscht, und dass die zweite Bypassleitung (82) den Flüssigkeitsauslass (64) des zweiten Flüssigkeitsabscheiders (46) mit einem dritten Bereich des Brennstoffzellensystems (10) verbindet, in dem ein dritter Druck vorherrscht, der geringer ist als der zweite Druck.

8. Brennstoffzellensystem nach Anspruch 6 oder 7,
**dadurch gekennzeichnet, dass** eine zweite Fördereinrichtung zum Fordern von aus dem Flüssigkeitsauslass (64) des zweiten Flüssigkeitsabscheiders (46) abzuführender Flüssigkeit in die Kathodengasabfuhrleitung (24) oder den dritten Flüssigkeitsabscheider (44) vorhanden ist.

9. Brennstoffzellensystem nach einem der Ansprüche 6 bis 8,
**dadurch gekennzeichnet, dass** der dritte Flüssigkeitsabscheider (44) ein Reservoir (50) sowie einen Pegelsensor (56) zur Messung eines Flüssigkeitspegels in dem Reservoir (50) umfasst, wobei ein Flüssigkeitsauslass (62) des dritten Flussigkeitsabscheiders (44) mit einer Flüssigkeitsabfuhrleitung (68) verbunden ist.

10. Brennstoffzellensystem nach Anspruch 9,
**dadurch gekennzeichnet, dass** in der mit dem Flüssigkeitsauslass (62) des dritten Flüssigkeitsabscheiders (44) verbundenen Flüssigkeitsabfuhrleitung (68) ein Ventil (74) angeordnet ist, das die Flüssigkeitsabfuhrleitung (68) freigibt, wenn der Flüssigkeitspegel in dem Reservoir (50) des dritten Flüssigkeitsabscheiders (44) eine vorgegebene Höhe erreicht hat.

11. Brennstoffzellensystem nach einem der Ansprüche 6 bis 8,
**dadurch gekennzeichnet, dass** ein Flüssigkeitsauslass (62) des dritten Flüssigkeitsabscheiders (44) über eine dritte Bypassleitung (86) mit der Kathodengasabfuhrleitung (24) verbunden ist.

12. Brennstoffzellensystem nach einem der Ansprüche 1 bis 11,
**dadurch gekennzeichnet, dass** die erste Bypassleitung (78) in eine mit einem Einlass des zweiten Flüssigkeitsabscheiders (46) verbundene Fluidleitung (30) mündet oder unmittelbar mit dem zweiten Flüssigkeitsabscheider (46) verbunden ist.

13. Brennstoffzellensystem nach einem der Ansprüche 6 bis 12,
**dadurch gekennzeichnet, dass** die zweite Bypassleitung (82) in eine mit einem Einlass des dritten Flüssigkeitsabscheiders (44) verbundene Fluidleitung (22) mündet oder unmittelbar mit dem dritten Flüssigkeitsabscheider (44) verbunden ist.

14. Brennstoffzellensystem nach einem der Ansprüche 1 bis 13,
**dadurch gekennzeichnet, dass** in der ersten, der zweiten und/oder der dritten Bypassleitung (78, 82, 86) eine Blende (80, 84, 88) vorgesehen ist.

15. Brennstoffzellensystem nach einem der Ansprüche 1 bis 14,
**dadurch gekennzeichnet, dass** in der ersten, der zweiten und/oder der dritten Bypassleitung (78, 82, 86) ein flüssigkeitsgefülltes U-Rohr angeordnet ist.

16. Brennstoffzellensystem nach einem der Ansprüche 1 bis 15,
**dadurch gekennzeichnet, dass** Mittel zum Beheizen der zweiten und/oder der dritten Bypassleitung (78, 82, 86) vorhanden sind.

17. Brennstoffzellensystem nach einem der Ansprüche 1 bis 16,
**dadurch gekennzeichnet, dass** der erste, der zweite und/oder der dritte Flüssigkeitsabscheider (42, 44, 46) ein Reservoir (48, 50, 52) aufweist/aufweisen, das so dimensioniert ist, dass es aus dem Flüssigkeitsabscheider/den Flüssigkeitsabscheidern (42, 44, 46) abzuführende Flüssigkeit solange speichern kann, bis die erste, die zweite und/oder die dritte Bypassleitung (78, 82, 86) und/oder die erste Blende, die zweite Blende und/oder die dritte Blende (80, 84, 88) ausreichend aufgeheizt worden ist/sind, um auch bei unter dem Gefrierpunkt liegenden Temperaturen eine ordnungsgemäße Abfuhr der Flüssigkeit aus dem Flüssigkeitsabscheider/den Flüssigkeitsabscheidern (42, 44, 46) zu gewährleisten.

## Claims

1. Fuel cell system (10) with
- at least one fuel cell (12) comprising an anode region (14) and a cathode region (18) separated from the anode region (14) by an electrolyte (16), and
- with a first liquid separator (42),
wherein a liquid outlet (60) of the first liquid separator (42) is connected to a second liquid separator (46) or to a cathode gas discharge line (24) via a first bypass line (78),
**characterised in that** means for heating the first bypass line (78) are provided.

2. Fuel cell system according to claim 1,
**characterised in that** the first liquid separator (42) is located in a first region of the fuel cell system (10) where a first pressure prevails, and **in that** the first bypass line (78) connects the liquid outlet (60) of the first liquid separator (42) to a second region of the fuel cell system (10) where a second pressure lower than the first pressure prevails.

3. Fuel cell system according to claim 1 or 2,
**characterised in that** a first conveying device is provided for conveying liquid to be discharged from the liquid outlet (60) of the first liquid separator (42) into the cathode gas discharge line (24) or into the second liquid separator (46).

4. Fuel cell system according to any of claims 1 to 3,
**characterised in that** the second liquid separator (46) includes a reservoir (52) and a level sensor (58) for measuring a liquid level in the reservoir (52), a liquid outlet (64) of the second liquid separator (46) being connected to a liquid discharge line (70).

5. Fuel cell system according to claim 4,
**characterised in that** the liquid discharge line (70) connected to the liquid outlet (64) of the second liquid separator (46) contains a valve (76) which opens the liquid discharge line (70) when the liquid in the reservoir (52) of the second liquid separator (46) has reached a preset level.

6. Fuel cell system according to any of claims 1 to 3,
**characterised in that** a liquid outlet (64) of the second liquid separator (46) is connected to a third liquid separator (44) or to the cathode gas discharge line (24) via a second bypass line (82).

7. Fuel cell system according to claim 6,
**characterised in that** the second liquid separator (46) is located in a second region of the fuel cell system (10) where a second pressure prevails, and **in that** the second bypass line (82) connects the liquid outlet (64) of the second liquid separator (46) to a third region of the fuel cell system (10) where a third pressure lower than the second pressure prevails.

8. Fuel cell system according to claim 6 or 7,
**characterised in that** a second conveying device is provided for conveying liquid to be discharged from the liquid outlet (64) of the second liquid separator (46) into the cathode gas discharge line (24) or into the third liquid separator (44).

9. Fuel cell system according to any of claims 6 to 8,
**characterised in that** the third liquid separator (44) includes a reservoir (50) and a level sensor (56) for measuring a liquid level in the reservoir (50), a liquid outlet (62) of the third liquid separator (44) being connected to a liquid discharge line (68).

10. Fuel cell system according to claim 9,
**characterised in that** the liquid discharge line (68) connected to the liquid outlet (62) of the third liquid separator (44) contains a valve (74) which opens the liquid discharge line (68) when the liquid in the reservoir (50) of the third liquid separator (44) has reached a preset level.

11. Fuel cell system according to any of claims 6 to 8,
**characterised in that** a liquid outlet (62) of the third liquid separator (44) is connected to the cathode gas discharge line (24) via a third bypass line (86).

12. Fuel cell system according to any of claims 1 to 11,
**characterised in that** the first bypass line (78) terminates in a fluid line (30) connected to an inlet of the second liquid separator (46) or is directly connected to the second liquid separator (46).

13. Fuel cell system according to any of claims 6 to 12,
**characterised in that** the second bypass line (82) terminates in a fluid line (22) connected to an inlet of the third liquid separator (44) or is directly connected to the third liquid separator (44).

14. Fuel cell system according to any of claims 1 to 13,
**characterised in that** an orifice (80, 84, 88) is provided in the first, second and/or third bypass line(s) (78, 82, 86).

15. Fuel cell system according to any of claims 1 to 14,
**characterised in that** a U-tube filled with liquid is provided in the first, second and/or third bypass line(s) (78, 82, 86).

16. Fuel cell system according to any of claims 1 to 15,
**characterised in that** means are provided for heating the second and/or third bypass line(s) (78, 82, 86).

17. Fuel cell system according to any of claims 1 to 16,
**characterised in that** the first, second and/or third bypass line(s) (78, 82, 86) comprise(s) a reservoir (48, 50, 52) which is dimensioned such that it can store the liquid to be discharged from the liquid separator(s) (42, 44, 46) until the first, second and/or third bypass line(s) (78, 82, 86) and/or the first, second and/or third orifice(s) (80, 84, 88) is/are heated to a temperature which ensures a proper discharge of the liquid from the liquid separator(s) (42, 44, 46) even at temperatures below freezing point.

## Revendications

1. Système de piles à combustible (10) avec
- au moins une pile à combustible (12) qui présente une zone d'anode (14) ainsi qu'une zone cathode (18) séparée de la zone d'anode (14) par un électrolyte (16), et
- ainsi qu'un premier séparateur de liquide (42),
une sortie de liquide (60) du premier séparateur de liquide (42) est reliée au deuxième séparateur de liquide (46) ou à une conduite d'évacuation du gaz cathodique (24) par une première conduite de dérivation (78),
**caractérisé en ce qu'**il existe des moyens pour chauffer la première conduite de dérivation (78).

2. Système de piles à combustible selon la revendication 1, **caractérisé en ce que** le premier séparateur de liquide (42) est disposé dans une première zone du système de piles à combustible (10), dans lequel règne une première pression, et **en ce que** la première conduite de dérivation (78) relie la sortie de liquide (60) du premier séparateur de liquide (42) à une deuxième zone du système de piles à combustible (10), dans lequel règne une deuxième pression qui est inférieure à la première pression.

3. Système de piles à combustible selon la revendication 1 ou 2, **caractérisé en ce qu'**il existe un premier dispositif de transport pour transporter le liquide à évacuer de la sortie de liquide (60) du premier séparateur de liquide (42) dans la conduite d'évacuation du gaz cathodique (24) ou dans le deuxième séparateur de liquide (46).

4. Système de piles à combustible selon l'une quelconque des revendications 1 à 3, **caractérisé en ce que** le deuxième séparateur de liquide (46) comprend un réservoir (52) ainsi qu'un capteur de niveau (58) pour mesurer un niveau de liquide dans le réservoir (52), une sortie de liquide (64) du deuxième séparateur de liquide (46) étant reliée à une conduite d'évacuation de liquide (70).

5. Système de piles à combustible selon la revendication 4, **caractérisé en ce qu'**une valve (76) est disposée dans la conduite d'évacuation de liquide (70) reliée à la sortie de liquide (64) du deuxième séparateur de liquide (46), laquelle libère la conduite d'évacuation de liquide (70) lorsque le niveau de liquide a atteint une hauteur prédéfinie dans le réservoir (52) du deuxième séparateur de liquide (46).

6. Système de piles à combustible selon l'une quelconque des revendications 1 à 3, **caractérisé en ce qu'**une sortie de liquide (64) du deuxième séparateur de liquide (46) est reliée par une deuxième conduite de dérivation (82) à un troisième séparateur de liquide (44) ou à la conduite d'évacuation de gaz cathodique (24).

7. Système de piles à combustible selon la revendication 6, **caractérisé en ce que** le deuxième séparateur de liquide (46) est disposé dans une deuxième zone d'un système de piles à combustible (10), dans laquelle règne une deuxième pression et **en ce que** la deuxième conduite de dérivation (82) relie la sortie de liquide (64) du deuxième séparateur de liquide (46) à une troisième zone du système de piles à combustible (10), dans laquelle règne une troisième pression qui est inférieure à la deuxième pression.

8. Système de piles à combustible selon la revendication 6 ou 7, **caractérisé en ce qu'**il existe un deuxième dispositif de transport pour transporter le liquide à évacuer de la sortie de liquide (64) du deuxième séparateur de liquide (46) dans la conduite d'évacuation du gaz cathodique (24) ou dans le troisième séparateur de liquide (44).

9. Système de piles à combustible selon l'une quelconque des revendications 6 à 8, **caractérisé en ce que** le troisième séparateur (44) de liquide comprend un réservoir (50) ainsi qu'un capteur de niveau (56) pour mesurer un niveau de liquide dans le réservoir (50), une sortie de liquide (62) du troisième séparateur de liquide (44) étant reliée à une conduite d'évacuation de liquide (68)

10. Système de piles à combustible selon la revendication 9, **caractérisé en ce qu'**une valve (74) est disposée dans la conduite d'évacuation de liquide (68) reliée à la sortie de liquide (62) du troisième séparateur de liquide (44), laquelle libère la conduite d'évacuation de liquide (68) lorsque le niveau de liquide a atteint une hauteur prédéfinie dans le réservoir (50) du troisième séparateur de liquide (44).

11. Système de piles à combustible selon l'une quelconque des revendications 6 à 8, **caractérisé en ce qu'**une sortie de liquide (62) du troisième séparateur de liquide (44) est reliée par une troisième conduite de dérivation (86) à la conduite d'évacuation de gaz cathodique (24).

12. Système de piles à combustible selon l'une quelconque des revendications 1 à 11, **caractérisé en ce que** la première conduite de dérivation (78) débouche dans une conduite de fluide (30) reliée à une admission du deuxième séparateur de liquide (46) ou est reliée directement au deuxième séparateur de liquide (46).

13. Système de piles à combustible selon l'une quelconque des revendications 6 à 12, **caractérisé en ce que** la deuxième conduite de dérivation (82) débouche dans une conduite de fluide (22) reliée à une admission du troisième séparateur de liquide (44) ou est reliée directement au troisième séparateur de liquide (44).

14. Système de piles à combustible selon l'une quelconque des revendications 1 à 13, **caractérisé en ce qu'**un étranglement (80, 84, 88) est prévu dans la première, la deuxième et / ou la troisième conduite de dérivation (78, 82, 86).

15. Système de piles à combustible selon l'une quelconque des revendications 1 à 14, **caractérisé en ce que** dans la première, la seconde et / ou la troisième conduite de dérivation (78, 82, 86) est disposé un tube en U rempli de liquide.

16. Système de piles à combustible selon l'une quelconque des revendications 1 à 15, **caractérisé en ce qu'**il existe des moyens pour chauffer la deuxième et / ou la troisième conduite de dérivation (78, 82, 86).

17. Système de piles à combustible selon l'une quelconque des revendications 1 à 16, **caractérisé en ce que** le premier, le deuxième et / ou le troisième séparateur de liquide (42, 44, 46) présente(nt) un réservoir (48, 50, 52) dont la dimension permet qu'il puisse stocker le liquide à évacuer provenant du séparateur de liquide / des séparateurs de liquide (42, 44, 46) jusqu'à ce que la première, la deuxième et / ou la troisième conduite d'évacuation (78, 82, 86) et / ou le premier, le deuxième et / ou le troisième étranglement (80, 84, 88) soit / soient suffisamment chauffé(s) pour garantir même à des températures inférieures au point de congélation une évacuation efficace du liquide provenant du séparateur de liquide / des séparateurs de liquide (42, 44, 46).
